# EUROPEAN PATENT APPLICATION

(11) **EP 4 847 459 A1**
(43) Date of publication of application: **02.12.2026**
(21) Application number: 25179865.8
(22) Date of filing: 30.05.2025
(51) Int. Cl.: C03B 37/012, C03B 37/027

(54) **PRESSURE INTERFACE FOR AN OPTICAL STRUCTURE**

(71) Applicant: Microsoft Technology Licensing, LLC, Redmond, WA 98052 (US)
(72) Inventor: MULCASTER, Jonathan James, Redmond, 98052-6399 (US); STROUD, John Robert, Redmond, 98052-6399 (US); HOOPER, Lucy Ellen, Redmond, 98052-6399 (US)
(74) Representative: CMS Cameron McKenna Nabarro Olswang LLP

(57) **Abstract**

A pressure interface of an optical structure and a method for providing a pressure interface of an optical structure prior to drawing the optical structure into an optical fiber. The optical structure 600B comprising a glass cladding 608B surrounding a second capillary 604B surrounding a first capillary 602B; a first hole 612B in the optical structure, wherein the first hole passes through the glass cladding and into the first capillary, and wherein the first hole is substantially radial to the glass cladding; and a second hole 614B in the optical structure, wherein the second hole passes through the glass cladding and into the second capillary, and wherein the hole is substantially not radial the glass cladding.

## Description

### BACKGROUND

Optical fibers may be formed from glass or another material by drawing the optical fiber from a cane in a drawing tower. In a drawing tower, a cane is heated and slowly pulled, elongating it. The resulting optical fibers have a smaller diameter than that of the cane, and an inner microstructure that matches that of the cane, albeit at a reduced scale. A cane is produced by drawing a cane preform, using a similar drawing process. During a drawing process, an act of heating, pulling and/and cooling may result in deformations in the canes and optical fibers which can affect the quality of a resultant optical fiber.

### SUMMARY

The following presents a simplified summary of the disclosure in order to provide a basic understanding to the reader. This summary is not intended to identify key features or essential features of the claimed subject matter nor is it intended to be used to limit the scope of the claimed subject matter. Its sole purpose is to present a selection of concepts disclosed herein in a simplified form as a prelude to the more detailed description that is presented later.

A first aspect is a method for providing a pressure interface of an optical structure prior to drawing the optical structure into an optical fiber. The optical structure comprising a glass cladding surrounding a second capillary surrounding a first capillary. The method comprising: making a first hole in the optical structure, wherein the first hole passes through the glass cladding and into the first capillary, and wherein the first hole is substantially radial to the glass cladding; and making a second hole in the optical structure, wherein the second hole passes through the glass cladding and into the second capillary, and wherein the second hole is substantially not radial to the glass cladding.

A second aspect is a pressure interface of an optical structure. The optical structure comprising: a glass cladding surrounding a second capillary surrounding a first capillary; a first hole in the optical structure, wherein the first hole passes through the glass cladding and into the first capillary, and wherein the first hole is substantially radial to the glass cladding; and a second hole in the optical structure, wherein the second hole passes through the glass cladding and into the second capillary, and wherein the hole is substantially not radial the glass cladding.

Many of the attendant features will be more readily appreciated as the same becomes better understood by reference to the following detailed description considered in connection with the accompanying drawings.

### DESCRIPTION OF THE DRAWINGS

The present description will be better understood from the following detailed description read in light of the accompanying drawings, wherein:
FIGs. 1-3 show transverse cross-sectional views of three different anti-resonant hollow core fibers.
FIG. 4 shows a cane face.
FIG. 5 shows a flowchart for providing a pressure interface of an optical structure.
FIG. 6A shows an apparatus for pressurizing an optical structure.
FIGs. 6B and 6C show top-down perspective views of an apparatus for pressurizing an optical structure.
FIG. 7 shows pressure seals for pressurizing an optical structure.
FIG. 8 shows an apparatus for pressurizing an optical structure.
Reference numerals are used throughout the description to designate parts in the accompanying drawings.

### DETAILED DESCRIPTION

The detailed description provided below in connection with the appended drawings is intended as a description of the present examples and is not intended to represent the only forms in which the present examples are constructed or utilized. The description sets forth the functions of the examples and the sequence of operations for constructing and operating the examples. However, the same or equivalent functions and sequences may be accomplished by different examples.

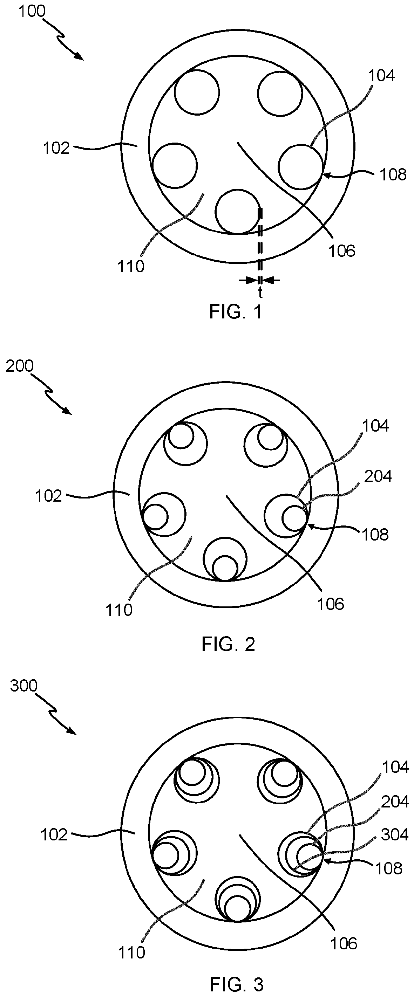

FIGs. 1-3 show transverse cross-sectional views of three different examples of antiresonant hollow core fibers (ARFs). The illustrated fibers each show their respective inner capillary structures. Light is guided in these fibers by an antiresonant optical effect. Each of the fibers 100, 200, 300 comprises a tubular outer cladding (or jacket) 102, a structured, inner, cladding comprising a plurality of tubular cladding capillaries 104, 204, 304 and a hollow core 106. The outer cladding 102 has a glass thickness that is typically much larger than that of the cladding capillaries 104, 204, 304. In the first example, shown in FIG. 1, the structured, inner, cladding comprises five capillaries 104 of the same cross-sectional size and shape, which are arranged inside the outer cladding 102 in a single ring so that the longitudinal axes of each cladding capillary 104 and of the outer cladding 102 are substantially parallel. Each cladding capillary 104 is in contact with (e.g. bonded to) the inner surface of the outer cladding 102 at an azimuthal location 108, such that the cladding capillaries 104 are evenly spaced around the inner circumference of the outer cladding 102 and are also spaced apart from each other by gaps 110 (i.e. such that there is no contact between neighboring capillaries). In some designs of ARF, the cladding capillaries 104 may be positioned in contact with each other (in other words, not spaced apart as in FIG. 1), but spacing to eliminate this contact can improve the fiber's optical performance. The gaps 110 remove nodes that arise at the contact points between adjacent tubes, and which tend to cause undesirable resonances that result in high losses. Accordingly, fibers with spaced-apart cladding capillaries may be referred to as "nodeless antiresonant hollow core fibers".

The arrangement of the cladding capillaries 104 in a ring around the inside of the tubular outer cladding 102 creates a central space, cavity, or void within the fiber, also with its longitudinal axis parallel to those of the outer cladding 102 and the cladding capillaries 104, which is the fiber's hollow core 106. The hollow core 106 is bounded by the inwardly facing parts of the outer surfaces of the cladding capillaries 104. This is the core boundary, and the material (glass or polymer, for example) of the capillary walls that make up this boundary provides the required antiresonance optical guidance effect or mechanism. The cladding capillaries 104 have a thickness, t, at the core boundary which defines the wavelength for which antiresonant optical guiding occurs in the ARF.

In the second example, shown in FIG. 2, each primary cladding capillary 104 has a secondary, smaller capillary 204 nested inside it, bonded to the inner surface of the primary cladding capillary 104, in this example at the same azimuthal location 108 as the point of bonding between the primary cladding capillary 104 and the outer cladding 102. These additional smaller capillaries 204 can reduce the optical loss. ARF designs of this type, with secondary capillaries, may be referred to as "nested antiresonant nodeless fibers" (NANFs) (TM).

The third example, shown in FIG. 3, has two smaller cladding capillaries 204, 304 nested inside each cladding capillary 104. As with the example shown in FIG. 2, each of the smaller capillaries 204, 304 is bonded to the inner surface of the immediately larger capillary at the same azimuthal location as the point of bonding between the primary cladding capillary 104 and the outer cladding 102. In this example, the smaller capillary 304 may be referred to as the secondary cladding capillary and the smallest capillary 204 may be referred to as the tertiary cladding capillary. The tertiary cladding capillary 204 is bonded to the inner surface of the secondary cladding capillary 304 and the secondary cladding capillary 304 is bonded to the inner surface of the primary cladding capillary 104. ARF designs of this type, with secondary and tertiary cladding capillaries may be referred to as "double-nested antiresonant nodeless fibers" (DNANFs). In yet further examples (not shown in the drawings) there may be a different configuration of cladding capillaries. For example, there may be smaller further capillaries, within the tertiary capillary 204 to provide further levels of nesting and/or there may be a plurality of secondary cladding capillaries within each primary cladding capillary, each secondary cladding capillary being bonded to the inner surface of the primary cladding capillary at a different azimuthal location and/or each primary cladding capillary may have an internal structure (e.g. one or more dividing walls).

A technique for manufacturing such ARFs (referred to herein as 'optical fibers' or simply 'fibers'), including the nested and double-nested variants, is to use a preform. Preforms can be drawn into canes which can in turn be drawn into an optical fiber. In other words, the preform is a typically glass element that is used as basis for creating optical fiber. Preforms have matching internal structures to the resulting hollow core optical fiber but are larger scale (e.g. the diameter of a preform is on the scale of at least a few centimeters, while diameters of optical fibers may be on the micrometer scale). Cane preforms are typically manufactured by fusing together a plurality of glass tubes. This involves positioning the tubes that will form the structured inner cladding inside a tube that will form the tubular outer cladding and then applying heat along the outside of the tubular outer cladding at the point where the tubes are to be fused together. This involves multiple operations, e.g. to fuse each set of nested capillaries to the inner surface of the tubular outer cladding.

The preform is connected to a drawing system (e.g. a fiber drawing tower) and then heated and pulled slowly, which causes a narrowing and stretching effect on the part of the preform that is being pulled. The internal structure with regard to the internal capillaries is theoretically maintained after the drawing process. In various examples, the drawn preform is cut off the preform after it has been drawn in a drawing system, which produces separated canes. The drawing process may be repeated on the canes to produce fibers with the fiber structure varying dependent upon aspects occurring during the drawing process, such as, but not limited to, surface tension of the drawn material, heating variations, etc.

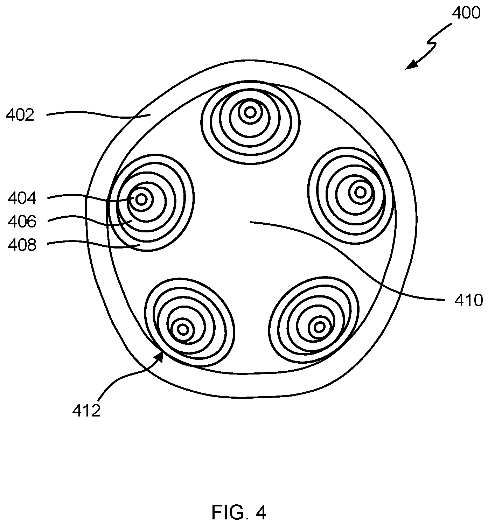

FIG. 4 shows an example of a cane face 400. The glass cladding 402, and internal nested capillaries (inner 404, middle 406 and outer 408) are shown, as well as the core 410.

As a preform is heated and drawn, effects such as surface tension and the pressure differences within the capillaries themselves lead to a deformation of the internal structure in the resultant cane or fiber, as the pressure differences act to close the fiber or cane. The deformation is visible from the end face 400. A consequence of this is that the outer 408 and middle 406 capillaries in the internal nesting structure may have an oval shape, as shown in FIG. 4. There is also the risk of deformation of the overall glass cladding 402, which houses the internal capillaries 404, 406, 408. To produce an optical fiber, the cane must be drawn, and further deformation may occur. A deformed optical fiber is of lower quality, with a potential loss of resonance due to the new shape, which affects the light that will eventually travel down the resulting fibers. There is therefore a desire to pressurize a cane to ensure that there is no loss of shape/structure during drawing of the optical fiber. As a result of different levels of deformation and their sizes, the core 410 and each of the internal capillaries 404, 406, 408 of the cane 400 will ideally require differing amounts of pressurization to prevent collapse of the structure, which may be referred to as a failed draw. A fused zone 412 is indicated where the glass cladding 402 and internal capillaries 404, 406, 408 are fused together.

Current methods of pressurization are techniques such as inflation, which is filling a cane with a fluid, such as a gas, to expand the capillaries and core of the cane during the drawing process to produce an optical fiber. This is performed using gas conduits that are placed into the capillaries. Common gases to use are inert gases, such as (but not limited to) argon. Owing to the cylindrical shape of a typical preform, cane or fiber, the gas used to pressurize enters at one end face of the cylinder. However, problems exist with these methods. Due to the varying sizes of the internal capillaries within the preforms (inner, middle and outer nesting), there isn't a constant pressure across the face of the cane, meaning a constant amount of gas for the capillaries is not sufficient to correct the deformation properly. The innermost capillary will need more pressurization than the middle-nested capillary, which will in turn need more pressurization than the outer nested capillary. All nested capillaries will need more pressurization than the overall glass cladding. There is a great difficulty with being able to correctly apply the right amount of pressure within the individual capillaries and across the face of a cane, owing to the small sizes of the cane, meaning it is difficult to pressurize the individual capillaries. Furthermore, because of the small size of a cane, a size of a gas conduit inserted into the cane will be small (on a micrometer scale), so it is incredibly difficult and time-consuming to insert gas conduits into a cane in order to draw an optical fiber. In some examples, an approximate range of 5 to 20 kPa is provided to capillaries of a cane with an innermost capillary having a higher pressure than surrounding capillaries. An exemplary core pressure may be approximately 10kPa. While FIG. 4 shows an example cane with inner, middle and outer nested capillaries preform, it should be noted that this is an illustrative example. It is also possible to pressurize canes with less or more nesting, or where capillaries are not nested.

Hence, disclosed herein is a method and apparatus for pressurization of an optical structure, such as a preform or a cane, during drawing into a second optical structure, such as a fiber. There is provided an improved pressurization method that results in an improvement in quality of a drawn cane or fiber. Features and advantages will be described in more detail herein.

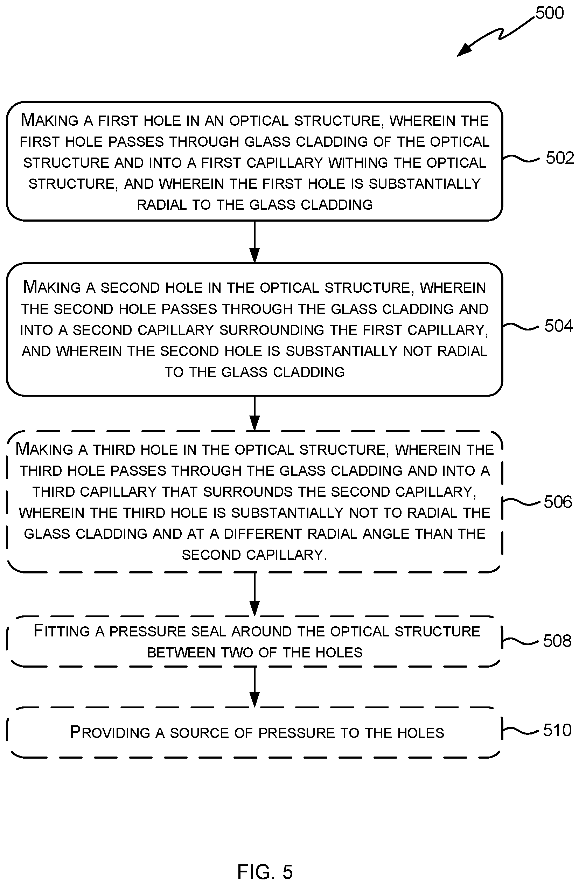

FIG. 5 shows a flowchart of a method 500 for providing a pressure interface of an optical structure prior to drawing the optical structure into an optical fiber. The optical structure comprises a glass cladding surrounding a second capillary surrounding a first capillary. The first capillary, second capillary and glass cladding are fused to an internal surface of the glass cladding. In one example, the optical structure is a cane. A cane may also be referred to as a second stage draw as it will provide material for a second stage in the process of producing an optical fiber, the first stage draw being from an optical fiber preform to a cane. However, the method is not limited to being performed only on canes and may be performed on other optical structures, but a cane is highlighted as an example. A cane may be a length of cane cut from a longer length of cane after first stage draw process is complete. In various examples, the cane is received pre-drawn. In various examples, the cane is still attached to the preform (i.e., the method is performed directly during the drawing process). A cane is typically largely cylindrical with two faces on opposing ends of the cylinder. One face may be used for drawing, while the other used for pressurization, i.e. adding pressurized fluid such as argon gas.

At block 502, the method comprises making a first hole in the optical structure. The first hole passes through the glass cladding and into the first capillary. The first hole is substantially radial to the glass cladding. A hole may be made by drilling, laser cutting, plasma cutting, etching, or any other suitable method. The first hole can be substantially radial to the glass cladding as due to the abutting of the first capillary, second capillary and glass cladding at one point at an inner wall of the glass cladding, the hole can pass through the second capillary wall but not provide fluid access from outside the glass cladding to a volume of the second capillary other than a volume contained by the first capillary. The part of the optical structure where a capillary abuts an inner wall of the glass cladding may be called a fused zone as the constituent structures are fused together along the optical structure along that point.

At block 504, the method further comprises making a second hole in the optical structure. The second hole passes through the glass cladding and into the second capillary. The second hole is substantially not radial to the glass cladding. By making a hole in the glass cladding that is substantially not radial to the glass cladding, additional nested capillaries may be accessed from outside the glass cladding, which would not have been possible using a radial hole. The first and second holes made at different angles to a radial of the glass cladding access different capillaries and are made at different points along the optical structure. If there are multiple sets of nested capillaries within the optical structure, see for example Figure 3 where there are five sets each comprising three nested capillaries, holes at a same angle to a radial of the glass cladding may be situated at a same or similar length along the optical structure.

At block 506, optionally, the method further comprises making a third hole in the optical structure. The third hole passes through the glass cladding and into a third capillary that surrounds the second capillary. The third hole is substantially not to radial the glass cladding and at a different radial angle than the second capillary. In this manner, each capillary may be separately pressurized by providing pressure to the respective capillary via a respective hole.

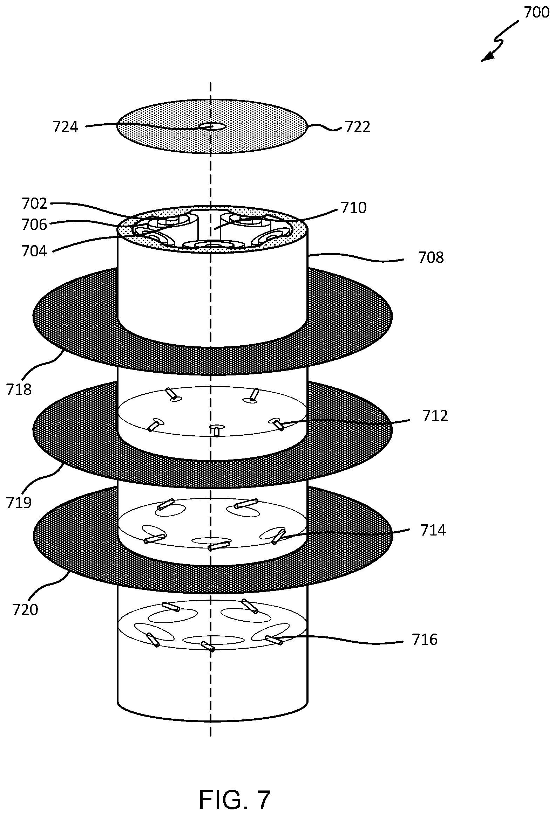

At block 508, optionally, the method further comprises fitting a pressure seal around the optical structure between two of the holes. A pressure seal around the optical structure may be used to provide a small pressure chamber that connects to one or more holes with each of the holes connecting to a capillary of same or similar internal diameter/size. This is described in greater detail in relation to FIG. 7.

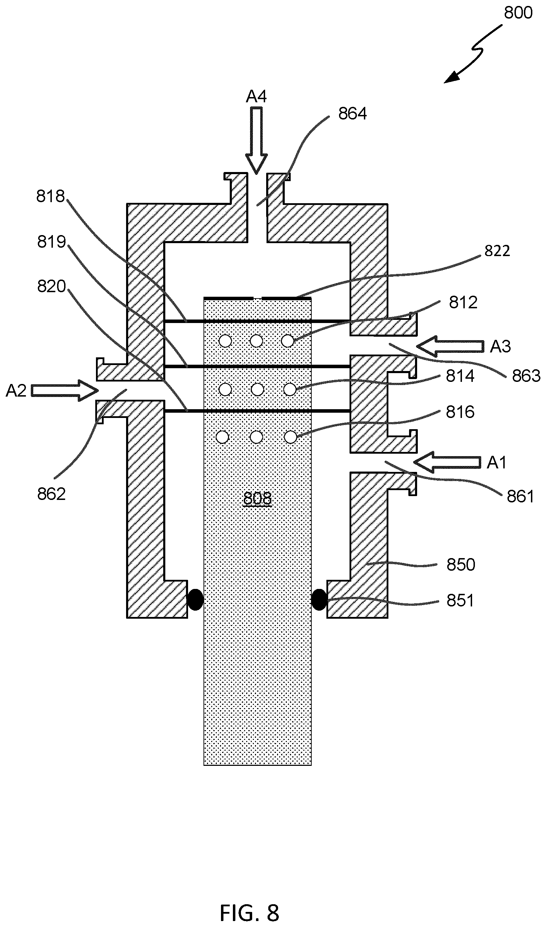

At block 510, optionally, the method further comprises providing a source of pressure to the holes. An example of this is described in greater detail in relation to FIG. 8.

The disclosed methods have many advantages. The making of angular holes enables access to nesting capillaries that cannot be accessed by radial holes, therefore there is a great variety in possible configurations of an optical structure that may be pressurized. Hence, the methods disclosed herein offer flexibility in terms of cane size and shape that the methods may be applied to, and also flexibility in the arrangement of capillaries that may be accessed by holes. The methods may be automated to increase cane drawing speed. Furthermore, by accurate pressurization of capillaries and other cane or preform structures, there is an increase in yield of high-quality optical fibers that reduce wastage. A direct access to each capillary using the holes at various angles allows for the complex pressurization requirements (i.e., allowing for different amounts of pressure to be applied to the internal capillaries as required, such as, for example, an innermost nested capillary being supplied by the highest pressure).

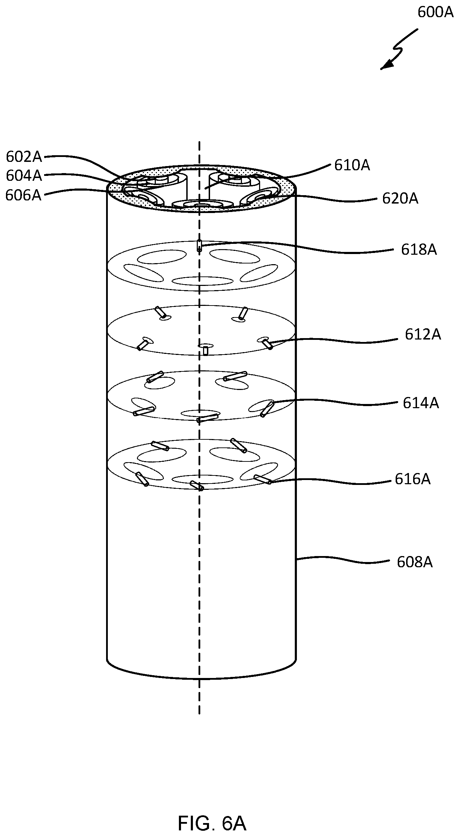

FIG. 6A shows an optical structure with a plurality of holes that may be manufactured using a method described in relation to FIG. 5. The figure shows an optical structure 600A, with internal capillaries 602A, 604A, 606A, and glass cladding 608A with a hollow core 610A. A plurality of holes are made in the optical structure 612A, 614A, 616A and 618A.

The optical structure 600A may by a cane produced from a preform, or another optical structure. Optical structure 600A has an internal arrangement similar to that shown in FIG. 3, with double nested internal capillaries 602A, 604A, and 606A, but alternative optical structures may have different structures in such as those illustrated in FIG. 1 and FIG. 2. There are five sets of nested capillaries shown; however, this is exemplary and optical structures may have fewer or more and they may not be symmetrical about a longitudinal axis.

The optical structure 600A has five capillaries having a first diameter/size 602A at least partially contained within five capillaries having a second diameter/size 604A, larger than the first diameter/size, and at least partially contained within five capillaries having a third diameter/size 606A larger than the first and second diameters/sizes. All of these are contained within a glass cladding 608A, and arranged such that each capillary and the glass cladding abuts one another at a region known as the fused zone 620A, which may extend longitudinally along the optical structure.

A plurality of holes 612A, 614A, 616A and 618A are made in the optical structure. The holes may be arranged such that they pass through the fused zone 620A to each access a volume of only one internal capillary of the optical structure 600A. The size of the holes in the figure is purely illustrative. The holes may, for example, have a diameter of approximately 250µm, but may also be much larger or smaller depending on a size of the capillaries and/or optical structure. As an example, for an optical fiber cane, tubes with an inner diameter as small as 50µm may be used. All holes are positioned at a circumference of the optical structure at a length along the optical structure as shown by the four large dotted ellipses around a circumference of the optical structure. All but one hole 618A each engage with one capillary represented by 15 non-circumferential dotted ellipses. The one hole 618A that does not engage with a capillary provided fluid communication with the hollow core 610A. The lengths of the holes along the optical structure may vary, however grouping the holes facilitates a smaller number of pressure seals to be used where multiple capillaries are provided with a common pressure, which is described later.

Hole 618A is shown in the figure. Optionally, such a hole may be included if it is desired to pressurize the core 610A of the glass cladding 608A via a hole made in the glass cladding 608A. As shown in the figure, the hole 618A is not provided proximal to a fused zone 620A and, if included, may be positioned anywhere along the length of the optical structure. There may be multiple holes that connect with the hollow core 610A of the optical structure 600A to enable greater fluid flow into the core. The fluid flow may also be increased by increasing the diameter of the hole engaging with the hollow core 610A. This may be advantageous as a hollow core 610A may have a greater volume than the nested capillaries. Furthermore, the size of any of the holes may be increased or decreased to affect the flow of gas/fluid into any particular capillary of set of capillaries.

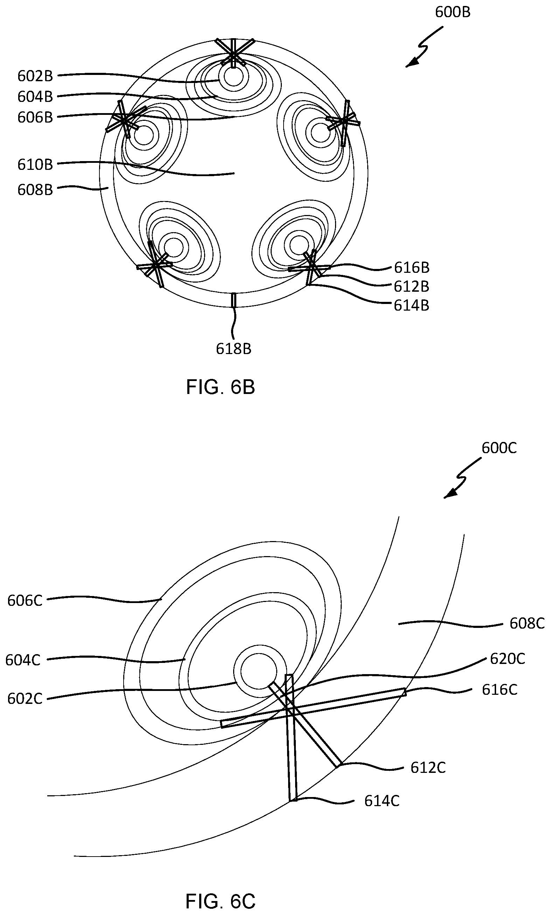

FIG. 6B shows a top-down view of a face of an optical structure such as the structure shown in FIG. 6A. The face of optical structure 600B is visible, showing nested capillaries 602B, 604B, 606B, the glass cladding 608B and hollow core 610B. The capillaries abut an inner wall of the glass cladding at a fused zone 612B where the holes 614B, 616B and 618B have been made. A hole 618B for pressurization of the hollow core is also shown in the figure.

Each of the holes 612B, 614B, 616B couples to a different capillary. A first subset of the holes 612B is substantially radial to the glass cladding 608B. A second subset of the plurality of holes 614B is substantially not radial to the glass cladding 608B. The exact angle of each hole depends on the size of capillary and position in the nesting arrangement. The outermost capillary will need a larger angle from a radial of the glass cladding 608B, while the innermost capillary needs the smallest angle which may be 0 degrees, i.e. radial to the glass cladding 608B. A third subset of the plurality of holes 616B is similarly made at an angle to the radius but may be a shallower angle than the second subset. To prevent any of the holes engaging with volumes defined multiple capillaries or the core, the holes can be drilled through the fused zone.

FIGs. 6B and 6C show some holes as overlapping, however this is because of the top-down view. As discussed above, holes may be made at different lengths along the optical structure to prevent overlap of holes and also to facilitate use of pressure seals.

FIG. 6C shows an enlarged view of a portion of FIG. 6B.

The plurality of holes are each positioned to access a different capillary in a set of nested capillaries. The holes that engage with a capillary each pass through a fused zone 620C to prevent the holes engage with the hollow core or bridging multiple capillaries. Another way of preventing the holes from interfering with one another is to provide holes at different lengths along the optical structure 600C. This is not shown in the figure due to the top-down perspective but is illustrated in FIG. 6A.

The method of FIG. 5 may produce optical structures such as those shown in FIGs. 6A to 6C, which allows for pressurization of each individual capillary in an optical structure. By using holes at multiple angles to the radial of a glass cladding each individual capillary in a set of nested capillaries may be accessed enabling a source of pressure to be applied to each individual capillary.

FIG. 7 shows an example of a pressure seal configuration for use with pressure interfaces of the above-described optical structures. An optical structure 700 is shown with double nested internal capillaries 702, 704, 706 of different sizes, in contact with a glass cladding 708 of the optical structure. A plurality of holes 712, 714, 716 in the side of the optical structure wall are shown with pressure seals 718, 719, 720 surrounding an outer wall of the optical structure 700 separating three subsets of holes. An end cap 722 is included with end cap hole 724 therethrough. The end cap hole 724 enables pressurization of the hollow core 710 rather than using a hole in the wall of the glass cladding 708.

In this example, pressure seals 718, 719 720 seal around a periphery of the optical structure and are secured between respective subsets of holes at different lengths along the optical structure. The holes 712 of a first subset access an innermost capillary 702, holes 714 of a second subset access a middle capillary 704, and holes 716 of a third subset access an outermost capillary 706. Pressure seals 718, 719, 720 enables control of pressures in the respective subsets of capillaries. The pressure seals may be layered and made out of any suitable material for sealing pressure, such as a silicone rubber, for example. In some examples, the pressure seals are O-ring pressure seals. In other examples, not illustrated, there may be more subsets of holes and even each hole being separated from the others by a seal of some configuration to provide a separate pressure control of each capillary.

The use of pressure seals enables a control of pressurization during a draw process. By controlling pressure in volumes defined by one or more pressure seals, it is possible to pressurize some or all capillaries with distinct pressures. As an example, the second subset of holes 714 are situated between pressure seals 718 and 719. Hence, if a source of pressure using, for example an inert gas such as argon, is applied between the pressure seals 719 and 720, the gas will only enter holes 714 and therefore only enter the middle-nested capillaries 706 of the optical structure 700. Gas will not enter the other holes or core due to the pressure isolation provided by the pressure seals. The same is true for other holes.

In FIG. 7, an end cap 722 is provided. This may be secured onto an end face of the optical structure 700 to enable the hollow core 710 to be pressurized during a draw process. In some examples, the end cap 722 includes an additional hole 724 to allow gas to enter and pressurize the core 710. Alternatively, as described previously in FIG. 6A, an additional hole for the core may be made in a side of the optical structure 700 to pressurize the hollow core 710.

The use of pressure seals enables control allowing pressurization of individual nested capillaries and also a hollow core. This enables fine-tuning and control over capillary and hollow core pressurization during a draw process to improve optical fiber quality and yield. To prevent pressurized gas/fluid from circumventing the pressure seals, the optical structure pressure interface may be contained within a housing, not shown in FIG. 7, but exemplified in FIG. 8.

FIG. 7 shows three pressure seals; however, a greater or smaller number of pressure seals may be used depending upon a number of subsets of holes that require individual pressure control.

FIG. 8 shows an apparatus 800 for engaging with a pressure interface of an optical structure for pressurizing hollows in the optical structure during drawing of an optical fiber. The techniques described and illustrated in relation to drawing an optical fiber from a cane may, for example, be applied to the drawing of an optical structure 808 from a preform. The apparatus 800 at least partially encloses a pressure interface portion of an optical structure 808 with the pressure interface position having a plurality of subgroups of holes 812, 814, 816 positioned at different lengths along the optical structure 808. The arrangement of holes shown in FIG. 8 is illustrative and not intended to be limiting in terms of number or location of holes.

In FIG. 8, a housing 850 provides a chamber that surrounds at least part of the cane 808 that includes the pressure interface. The housing 850 contains three pressure seals 814 subdividing the chamber that act to isolate a particular subset of holes from another subset of holes, wherein each subset of holes is grouped into a subset based on a size of capillary the hole engages with/connects to. The pressure seals are located between subsets of holes and also seal against interior walls of the housing 850. Ports 861- 864 in the housing 850 enable pressure to be applied to volumes within the housing 850. Each port is in fluid communication with either a subset of holes and a correspond to a set of capillaries that enable capillary pressurization during a draw, or a hollow core of the optical structure 808. Four ports 861- 864 are shown and four arrows A1-A4 indicate different fluid paths into the chamber whereby distinct pressures may be applied to the optical structure or other hollow structures within the optical structure 808. The housing 850 may seal against an optical structure 808 by one or more compressive seals 851 to isolate the pressure interface portion of the optical structure. An end of the optical structure 808 may be covered by end cap 822, which may either prevent fluid entering the core, or include a hole to enable fluid to pressurize the core and therefore the glass cladding. The end cap 822 seals the end of nested capillaries of the optical structure.

The apparatus shown in FIG. 8 is exemplary, and various other possible configurations or elements may be either included or removed. For example, for thermal management, the apparatus 800 may include water cooling. In some examples, the apparatus 800 may be mounted to a draw tower so that optical fibers are pressurized as they are drawn from canes or other optical structures. The number of pressure seals may vary based on the number of different pressures that are to be applied to capillaries and other hollow sections of an optical structure 808.

Capillaries may take any shape and may not be circular or elliptical however those shapes are merely provided as illustration in the figures and should not be considered limiting.

Alternatively, or in addition to the other examples described herein, examples include any combination of the following:
Clause A. A method for providing a pressure interface of an optical structure prior to drawing the optical structure into an optical fiber, the optical structure comprising a glass cladding surrounding a second capillary surrounding a first capillary; the method comprising: making a first hole in the optical structure, wherein the first hole passes through the glass cladding and into the first capillary, and wherein the first hole is substantially radial to the glass cladding; and making a second hole in the optical structure, wherein the second hole passes through the glass cladding and into the second capillary, and wherein the second hole is substantially not radial to the glass cladding.
Clause B. The method of clause A, wherein the optical structure further comprises a third capillary surrounded by the glass cladding, the third capillary surrounding the second capillary, the method further comprising: making a third hole in the optical structure, wherein the third hole passes through the glass cladding and into the third capillary, wherein the third hole is substantially not to radial the glass cladding and at a different radial angle than the second capillary.
Clause C. The method of clause B, wherein the third hole is at an angle to a radial axis of the optical structure that is greater than that of the second hole.
Clause D. The method of any preceding clause further comprising sealing an end of the optical structure that is proximal to the holes.
Clause E. The method of clause D, wherein the sealed end comprises a hole passing into a hollow core of the optical structure outside any of the capillaries.
Clause F. The method of any of clauses A to D further comprising: making a fourth hole in the optical structure, wherein the fourth hole passes through the glass cladding into a hollow core of the optical structure outside any of the capillaries.
Clause G. The method of any preceding clause, wherein the optical structure comprises a cane produced from an optical fiber preform.
Clause H. The method of any preceding clause, wherein the holes are produced by drilling, laser cutting, plasma cutting, or etching.
Clause I. The method of any preceding clause, further comprising providing at least part of the optical structure in a drawing tower.
Clause J. The method of any preceding clause further comprising fitting a pressure seal around the optical structure between two of the holes.
Clause K. The method of any preceding clause, further comprising providing a source of pressure to the holes.
Clause L. The method of any preceding clause, wherein the holes are at different lengths along the optical structure.
Clause M. A pressure interface of an optical structure, the optical structure comprising: a glass cladding surrounding a second capillary surrounding a first capillary; a first hole in the optical structure, wherein the first hole passes through the glass cladding and into the first capillary, and wherein the first hole is substantially radial to the glass cladding; and a second hole in the optical structure, wherein the second hole passes through the glass cladding and into the second capillary, and wherein the hole is substantially not radial the glass cladding.
Clause N. The pressure interface of clause M, wherein the optical structure further comprises: a third capillary surrounded by the glass cladding, the third capillary surrounding the second capillary; and a third hole in the optical structure, wherein the third hole passes through the glass cladding and into the third capillary, and wherein the third hole is substantially not radial to the glass cladding and at a different radial angle than the second capillary.
Clause O. The pressure interface of clause N, wherein the third hole is at an angle to a radial axis of the optical structure that is greater than that of the second hole.
Clause P. The pressure interface of any of clauses M to O further comprising a seal at an end of the optical structure proximal to the holes.
Clause Q. The pressure interface of clause P, wherein the sealed end comprises a hole passing into a hollow core of the optical structure outside any of the capillaries.
Clause R. The pressure interface of any of clauses M to P further comprising: a fourth hole in the optical structure, wherein the fourth hole passes through the glass cladding into a hollow core of the optical structure outside any of the capillaries.
Clause S. The pressure interface of any of clauses M to R, wherein the optical structure comprises a cane produced from an optical fiber preform.
Clause T. The pressure interface of any of clauses M to S further comprising a pressure seal fitted around the optical structure between two of the holes.
Clause U. The pressure interface of any of clauses M to T, wherein the holes are at different lengths along the optical structure.

Any range or device value given herein may be extended or altered without losing the effect sought, as will be apparent to the skilled person.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item refers to one or more of those items.

The operations of the methods described herein may be carried out in any suitable order, or simultaneously where appropriate. Additionally, individual blocks may be deleted from any of the methods without departing from the scope of the subject matter described herein. Aspects of any of the examples described above may be combined with aspects of any of the other examples described to form further examples without losing the effect sought.

The term 'comprising' is used herein to mean including the method blocks or elements identified, but that such blocks or elements do not comprise an exclusive list and a method or apparatus may contain additional blocks or elements.

It will be understood that the above description is given by way of example only and that various modifications may be made by those skilled in the art. The above specification, examples and data provide a complete description of the structure and use of exemplary embodiments. Although various embodiments have been described above with a certain degree of particularity, or with reference to one or more individual embodiments, those skilled in the art could make numerous alterations to the disclosed embodiments without departing from the scope of this specification.

## Claims

1. A method (500) for providing a pressure interface of an optical structure prior to drawing the optical structure into an optical fiber, the optical structure comprising a glass cladding surrounding a second capillary surrounding a first capillary; the method comprising:
making (502) a first hole in the optical structure, wherein the first hole passes through the glass cladding and into the first capillary, and wherein the first hole is substantially radial to the glass cladding; and
making (504) a second hole in the optical structure, wherein the second hole passes through the glass cladding and into the second capillary, and wherein the second hole is substantially not radial to the glass cladding.

2. The method of claim 1, wherein the optical structure further comprises a third capillary surrounded by the glass cladding, the third capillary surrounding the second capillary, the method further comprising:
making (506) a third hole in the optical structure, wherein the third hole passes through the glass cladding and into the third capillary, wherein the third hole is substantially not to radial the glass cladding and at a different radial angle than the second capillary.

3. The method of claim 2, wherein the third hole is at an angle to a radial axis of the optical structure that is greater than that of the second hole.

4. The method of any preceding claim further comprising sealing an end of the optical structure that is proximal to the holes.

5. The method of claim 4, wherein the sealed end comprises a hole passing into a hollow core of the optical structure outside any of the capillaries.

6. The method of any of claim 1 to 4 further comprising:
making a fourth hole in the optical structure, wherein the fourth hole passes through the glass cladding into a hollow core of the optical structure outside any of the capillaries.

7. The method of any preceding claim further comprising fitting (508) a pressure seal around the optical structure between two of the holes.

8. The method of any preceding claim, wherein the holes are at different lengths along the optical structure.

9. A pressure interface of an optical structure 600A, the optical structure comprising:
a glass cladding (608A) surrounding a second capillary (604A) surrounding a first capillary (602A);
a first hole (612A) in the optical structure, wherein the first hole passes through the glass cladding and into the first capillary, and wherein the first hole is substantially radial to the glass cladding; and
a second hole (614A) in the optical structure, wherein the second hole passes through the glass cladding and into the second capillary, and wherein the hole is substantially not radial the glass cladding.

10. The pressure interface of claim 9, wherein the optical structure further comprises:
a third capillary (606A) surrounded by the glass cladding, the third capillary surrounding the second capillary; and
a third hole (616A) in the optical structure, wherein the third hole passes through the glass cladding and into the third capillary, and wherein the third hole is substantially not radial to the glass cladding and at a different radial angle than the second capillary.

11. The pressure interface of claim 10, wherein the third hole is at an angle to a radial axis of the optical structure that is greater than that of the second hole.

12. The pressure interface of any of claims 9 to 11 further comprising a seal (722) at an end of the optical structure proximal to the holes.

13. The pressure interface of claim 12, wherein the sealed end comprises a hole (724) passing into a hollow core of the optical structure outside any of the capillaries.

14. The pressure interface of any of claims 9 to 12 further comprising:
a fourth hole (618A) in the optical structure, wherein the fourth hole passes through the glass cladding into a hollow core of the optical structure outside any of the capillaries.

15. The pressure interface of any of claims 9 to 14 further comprising a pressure seal (718, 719, 720) fitted around the optical structure between two of the holes.
